# EUROPEAN PATENT APPLICATION

(11) **EP 1 486 837 A1**
(43) Date of publication of application: **15.12.2004**
(21) Application number: 03704720.6
(22) Date of filing: 13.02.2003
(51) Int. Cl.: G05B 19/21, G01D 5/26, G01S 5/28

(54) **MACHINE-TOOL WITH CONTINUOUS POSITION ADJUSTMENT**

(30) Priority: 13.02.2002 ES 200200344
(71) Applicant: FUNDACION FATRONIK, 20870 Elgoibar (Gipuzkoa) (ES); Consejo Superior de Investigaciones Cientificas, 28006 Madrid (ES); AIDO - Instituto Tecnologico de Optica, Color e Imagen, E-46980 Paterna (ES)
(72) Inventor: BUENO ZABALO, Ricardo, E-20001 San Sebastián (ES); ARANA URQUIDI, Jesús Maria, E-20600 Eibar (ES); LASA MORAN, Aitor, E-20870 Elgoibar (ES); SAN MARTIN UGARTE, Yon, E-20014 San Sebastián (ES); JIMENEZ RUIZ, Antonio, E-28006 Madrid (ES); CALDERON ESTEVEZ, Leopoldo, E-28006 Madrid (ES); CERES RUIZ, Ramon, E-28006 Madrid (ES); MARTIN ABREU, José Miguel, E-28006 Madrid (ES); PONS ROVIRA, José Luis, E-28006 Madrid (ES); CABALLERO AROCA, José Francisco, E-46980 Paterna (ES); MICO SERRANO, Vicente, E-46980 Paterna (ES); MOLINA JIMENEZ, Maria Teresa, E-46980 Paterna (ES); PEREZ PICAZO, Emilio, E-46980 Paterna (ES); SIMON MARTIN, Santiago, E-46980 Paterna (ES)
(74) Representative: Carpintero Lopez, Francisco
(86) International application number: PCT/ES2003/000079
(87) International publication number: WO 2003/069417

(57) **Abstract**

The machine tool incorporates a continuous control system which allows to control the position of the machine head (3) throughout its entire motion, and with the deviation data obtained acts on the machine servomotors to take the head (3) to its correct position. The control system comprises a laser emitter (6), a first deflecting mirror (12), a second deflecting mirror (13) and a retro-reflecting mirror (5), mounted on the machine head (3) with the particular characteristic that each of the two deflecting mirrors (12) and (13) has its own motor (16), (17) that allows to change its orientation independently as a function of the deviations found of the head (3). The system is complemented by an interferometer (10), a positional detection system (14) and a data acquisition and processing system (15), with the characteristic that all system elements with the exception of the retro-reflecting mirror (5) are placed on a platform (4) which is attached to the structure or support (1) of the machine in order to reduce the mass suspended on the moving elements and therefore undesired inertia.

## Description

### OBJECT OF THE INVENTION

The machine tool object of the invention incorporates a control system which allows to control the position of a machine tool head as it moves along its working trajectory, and in view of the deviation data obtained to act directly on the numerical control of the machine to correct the head position during the movement of the machine so that the head does not deviate from the preset working trajectory.

The machine object of the invention incorporates a control system which in addition to accurately determining the position of the head at each instant allows a fast dynamic response of all its elements in order to act quickly on the numerical control of the machine and thereby ensure that the control can be continuous, and therefore that the machine does not stray from the preset trajectory.

### BACKGROUND OF THE INVENTION

A machine tool consists of a traveling gantry which may move along three rectilinear directions, and which holds a head which in turn holds the corresponding revolving tool. These machines generally include a numerical control system which is meant to make the head move along a preset working trajectory, but in practice when precision work is performed it is usual for maladjustments, wear and play to arise over time, so that it may be necessary to recalibrate and tune the machine.

For this reason tracking systems have proliferated, generally employing optical means, mainly meant to obtain accurate information on the position of a moving object and which are used to calibrate the machine or robot during its assembly, before its start up or during periodic check ups in order to readjust them to make position deviations as small as possible.

These systems are also used as external means which allow to know the position of the head, normally in robotic systems, at critical times or positions of its work, in order to control head deviations so that when these are excessive the machine is stopped and its position corrected.

Tracking and control optical systems for static or moving objects are described for example in patents EP 1 001 251, US 4,714,339 and US 4,790,651.

Specifically, these systems generally consist of a laser gun emitting a beam that reflects on a retroreflecting mirror provided on the moving object or tool to be controlled. The beam returns to the gun after being reflected on a directable mirror and incides on a photosensor that measures the position of the beam along two axes to determine the deviation of the reflected beam. These systems are also generally provided with an interferometer which allows to determine the distance between the emitter and the receiver, so that with the information of the rotations of the photosensor element and the interferometer measurements the coordinates of the position of the object or tool may be determined.

The measurement of the deviation detected by the photosensor is used to redirect the mirror towards the new position of the tool so that it can maintain its alignment for the following measurement.

These systems can be used therefore to find out the position of the tool head to varying degrees of accuracy, but with the data obtained the numerical control of the machine or robot must be acted upon and the required position corrections entered. That is, the tracking system does not interact with the machine but is simply an external system which may obtain the spatial position of the machine head.

Obviously this type of operation implies stopping the machine, and therefore position corrections can only be made at certain, generally critical, points of the trajectory as otherwise stoppages would be constant and the production rate would be unacceptably slow.

Also known is US Patent 4,621,926 relating to an interferometer system for controlling the movement of an object along a predetermined trajectory. This system incorporates three laser emitters which incide on two mirrors attached to the machine head, employing three interferometers to determine the three coordinates of the spatial position of the head. This optical system determines the positions very accurately but lacks a fast dynamic response which can act on the machine control system quickly enough to allow a continuous control of the entire trajectory, so that this system would be suitable for obtaining accurate information on the deviation of the head but would not be suitable for acting on the head as it moves at great speeds during the working operations of the tool. One must consider that a miller head for example moves at speeds of up to 2 meters per second.

For this reason, the control system will be actuated with the machine stopped, so that these systems are valid for the initial calibration of the machine or to adjust its position at the end of an operation or working cycle, but not for real time control.

This lack of dynamic response is due among other reasons to the masses hung from the various elements which must be moved or redirected every time the tool position changes, such as on the head or on the mirror itself, which increase the inertia of these moving elements preventing their quick repositioning and therefore preventing a continuous actuation on the machine.

Specifically, the mirror that deflects the beam between the emitter and the header must be positionable and directable in two senses, so that it uses two motors with their corresponding encoders and tachometers suspended on the mirror, so that the mass of the assembly prevents a fast repositioning of the mirror.

Additionally, on the machine head are mounted both the retro-reflecting mirror or mirrors and the deviation detection elements, which on one hand add an unnecessary and undesirable weight to the head and in addition hinder their assembly and attachment on a head which is often small, and more importantly have the disadvantage that the power supply and control of the position detection card requires wiring the moving head, with the resulting increased complexity of the machine.

### DESCRIPTION OF THE INVENTION

The machine tool of the invention incorporates a control system based on an optical system which can determine the position of the machine header at all times and act immediately and continuously on the control system of the machine in order to reposition the head to its correct position during the motion of the head in its working cycle, thereby preventing deviations from the preprogrammed working trajectory.

For this purpose, the optical system comprises a number of elements which allow to quickly and accurately detect the head deviations so that it is possible to act quickly on the control system of the machine.

Specifically, the optical system comprises a laser emitter mounted on a platform that is attached to the machine, a retro-reflecting mirror placed on the machine tool and two deflecting mirrors which deflect the laser beam from the emitter to the retro-reflector mounted on the head, and vice versa.

One of the characteristics of the invention specifically relates to the use of two independent deflecting mirrors mounted on an external platform of the machine, and each provided with an independent motor for reorientation towards the position of the retro-reflecting mirror.

The use of separate and independent mirrors allows each mirror to have its own motor, so that the masses suspended from each mirror are reduced and so the dynamic reorientation capacity is substantially improved, allowing to measure and act on the machine much more quickly and to correct the position of the head while the machine is working.

The first deflecting mirror can be oriented along an X-axis while the second deflecting mirror can be oriented along a Y-axis, perpendicular to the orientation axis of the other mirror.

In order to determine the deviations in the plane perpendicular to the laser beam a two-dimensional position detection system (PDS) is used which can detect movement on the surface of a beam, providing the coordinates of said beam with respect to its center. This detection system is placed on an external support so that it is not a mass suspended from the head or other moving elements, thereby not affecting the dynamic performance of the system and further allowing to eliminate the wires suspended on the head.

The control system also uses an interferometer which measures the distance between the laser emitter and the tool head.

Finally, a control system is used which depending on the data from the PDS, the mirror motor encoders and the interferometer measurements calculates the positional deviation of the position of the head and instantly acts on the motors of the first and second mirror, in order to reorient them with respect to the new position of the head, and on the machine tool control to move the head to the correct position without interrupting the operation of the machine.

As indicated above the machine tool of the invention has the particular characteristic that only the reflecting mirror is mounted on the machine head, with all other components mounted on fixed supports or platforms, thereby avoiding the external wiring used in other systems and the presence of excessive weight on the head and mirrors.

The operation of the control system is as follows:

The laser emitter sends a beam which incides on the first deflecting mirror so that the beam is sent towards the second deflecting mirror which in turn sends it to the retro-reflecting mirror mounted on the machine head.

The beam is reflected by the retro-reflecting mirror inciding on the second mirror, which deflects it to the first mirror and this mirror in turn sends it to the PDS which determines the deviation of the reflected beam from the emitted beam, along the X and Y axes.

The reflected beam is also made to pass through the interferometer, which measures the interference bands between the emitted and reflected beams, thereby calculating the distance between the tracking point and the mirror on the head.

The data obtained from the position detection system and the interferometer are entered in the machine control system which calculates the real current position of the machine and comparing it to the expected position determines the positional deviation. These data are communicated directly to the machine control so that it acts on the machine servomotors, positioning the tool point at the correct position.

Additionally, the measurements of deviation along the X and Y axes are used to send corresponding commands to the positioning motors of the first and second deflecting mirrors, so that they reorient themselves in view of the real position of the head retro-reflector.

### DESCRIPTION OF THE DRAWINGS

As a complement of the description being made and to aid a better understanding of the characteristics of the invention, the present descriptive memory is accompanied by a set of drawings which are an integral part of the description and where for purposes of illustration only and in a nonlimiting manner the following is shown:

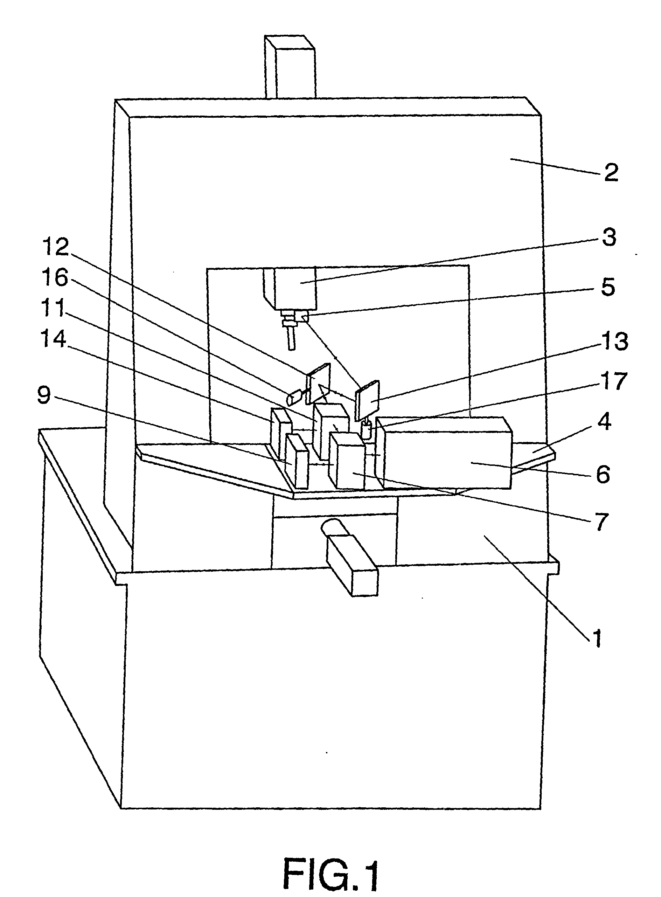

Figure 1 shows a perspective view of a machine tool with the control system of the invention.
Figure 2 shows a schematic representation of the operation of the control system object of the invention.

### PREFERRED EMBODIMENT OF THE INVENTION

The machine tool of the invention comprises a support (1), a traveling gantry (2) and a head (3), incorporating a platform (4) on which is mounted the majority of the components of the control system. On the head (3) is mounted a retro-reflector (5) which constitutes the only element mounted on a moving element of the machine.

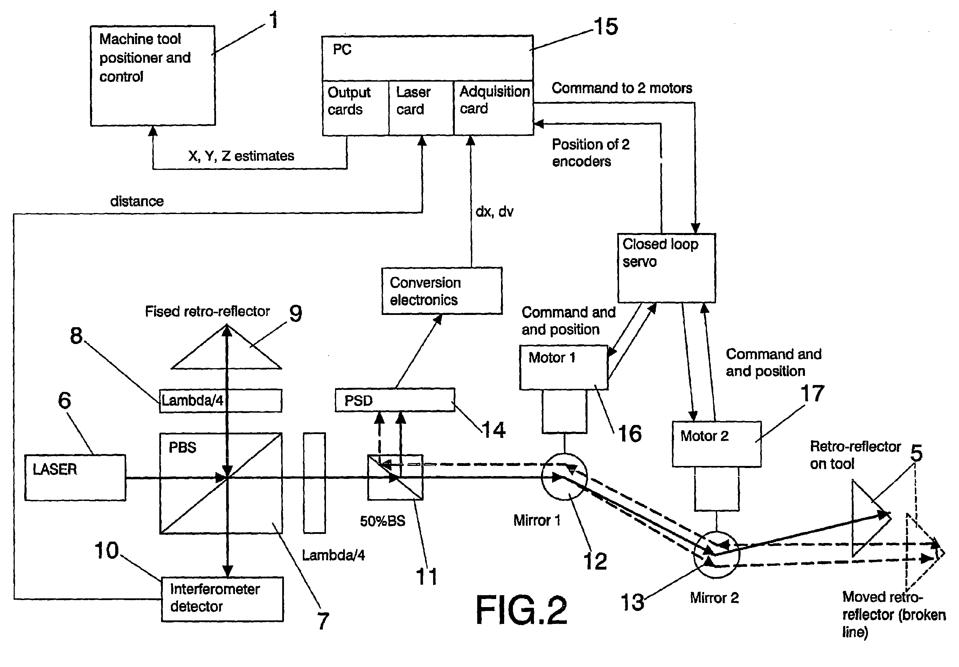

As relates to the control system, as seen in the Figure 2, it comprises a laser emitter (6) that emits a beam which enters a polarization splitter (7) that separates the horizontal component (transmitted by the beam splitter (7) and known as the "measurement beam") and the vertical component (reflected by the measurement beam and known as the "reference beam"), the reference beam passing through a quarter wave plate (8) to reach a fixed retro-reflector (9). The vertical component of the beam is reflected by the fixed retro-reflector (9), passes through the quarter wave plate (8) again and incides on the beam splitter (7) again, being transmitted by it to reach the receiver of the interferometer system (10). This beam serves as a comparative reference for the later measurement of the distance to the head which is performed by the interferometer combining this signal with that obtained by the measurement beam of the interferometer system, as described further below.

The horizontal component of the measurement beam that has been transmitted by the beam splitter (7) passes through a quarter wave plate and a beam splitter (11) to incide on a plane mirror that deflects the beam towards the first deflecting mirror (12), which in turn deflects it towards a second deflecting mirror (13) that directs the beam to the retro-reflector (5) mounted on the head (3) of the machine tool.

The beam reflected by the retroreflector (5) again incides on the second deflecting mirror (13), is deflected towards the first deflecting mirror (12) which directs it towards the plane mirror, from where it incides on the beam splitter (11) and on the quarter wave plate, where the beam is divided into a reflected and a transmitted part.

The reflected beam incides on a positional detection system(14) so that the data obtained by this detection system (14) are used to act on the deflecting mirrors (12) and (13), correcting their orientation so that the incidence on the detector (14) is always at a given position. This system will serve to calculate the orientation of the measurement beam and change the position of the head (3), following the previously programmed movement.

The beam transmitted by the quarter wave plate incides on the polarisation beam splitter (7) and is reflected by it towards the receiver of the interferometer system (10).

At the interferometer receiver (10) the reference beam, which travels a constant distance in time, and the measurement beam, that travels a distance that depends on the position of the retroreflecting mirror (5) anchored to the head (3), are combine to allow calculating the distance travelled by the retroreflecting mirror (5) in relation to a given reference position.

The position detector (PDS) comprises an opto-electronic sensor that can provide information on the position of a point of light that incides on its photosensitive surface; specifically, a matrix sensor is used that allows determining the position of the beam on the X and Y axes.

The deviation values found by the position detector (14) are sent to the control system (15) which in turn uses them to send the corresponding commands to the motor (16) which positions the first mirror (12) and the motor (17) which positions the second mirror (13), so that the mirrors (12) and (13) are reoriented towards the true position of the head at all times.

In addition, the control system (15) uses the data from the mirror motor encoders and the value of the distance calculated by the interferometer (10) to estimate the XYZ coordinates of the machine head and sends the corresponding commands to the control system (15) of the machine tool to reposition the head in the correct location.

As shown in figure 2, only the retro-reflector (5) is mounted on the machine head, while all other components are mounted on a fixed platform (4) in order to greatly reduce the masses suspended from the moving elements, such as from the head, which naturally improves the dynamic performance of the system.

For this reason, also important is the use of two independent and separate deflecting mirrors (12), each of which can be directed along a different axis and positioned by different independent motors (16) and (17), so that each motor must only carry its corresponding mirror and thereby providing a fast response capability so that the system can be controlled continuously.

Specifically, galvanometric motors are used that allow an optical angular excursion of ± 20°, with the axes of the motors placed perpendicular and separated by a certain distance so that they do not intersect.

The optical aperture of the deflecting mirrors is 15 mm., so that they are light enough to allow a bandwidth of 2500 Hz.

It is not considered necessary to extend this description for an expert in the field to understand the scope of the invention and the advantages derived thereof.

The materials, shape, size and arrangement of the elements may vary as long as the essence of the invention is not affected.

## Claims

1. Machine tool with continuous positional control, comprising a support (1), a traveling gantry (2) and a directable head (3) which moves the working tool, **characterized in that** it incorporates:
- A laser emitter (6), mounted on a platform (4) joined to the support (1) of the machine, which emits a laser beam towards
- a retro-reflecting mirror (5) mounted on the head (3) of the tool,
- a first deflecting mirror (12), which deflects the laser beam and incorporates a motor (16) that allows to move the mirror along an X axis,
- a second deflecting mirror (13), which deflects the laser beam and incorporates a motor (17) that allows to move the mirror along a Y axis,
- a positional detector (14) placed outside the machine head (3), which determines the deviation of the beams reflected by the first and second deflecting mirrors (12) and (13), in a plane perpendicular to the laser beam.
- an interferometer (10) which measures the distance between the laser emitter (6) and the retro-reflecting mirror (5) mounted on the tool head (3),
- a control system (15) which, depending on the values obtained from the position detector (14), of the mirror motor encoders (16) and (17) of the mirrors (12) and (13) and the measurement of the interferometer (10), calculates the deviations of the position of the head (3) and instantaneously acts on:
- the motor (16) of the first deflecting mirror (12) and the motor (17) of the second deflecting mirror (13), to reorient them with respect to the new position of the head (3) and
- on the machine control in order to move the head (3) to the correct position, during the motion of the machine itself,
with the particular characteristic that the retro-reflecting mirror (5) is mounted on the machine head (3) while all other components are mounted on a platform (4) which is attached to the support or structure (1) of the machine.
